# EUROPEAN PATENT APPLICATION

(11) **EP 1 308 085 A2**
(43) Date of publication of application: **07.05.2003**
(21) Application number: 02394107.3
(22) Date of filing: 30.10.2002
(51) Int. Cl.: A01G 25/16, G01F 23/292

(54) **Apparatus and method for monitoring soil moisture conditions and for maintaining soil moisture conditions**

(30) Priority: 31.10.2001 US 3964
(71) Applicant: Flow-Rite Controls, Ltd., Grand Rapids, Michigan 49548 (US)
(72) Inventor: Campau, Daniel N., Ada, Michigan 49301 (US)
(74) Representative: Brophy, David

(57) **Abstract**

The present invention is directed to an apparatus and a process which is low-cost, simple to use, reliable and long-lived and will effectively monitor the moisture condition of a volume of soil. In accordance with the invention, a light transmitting rod is placed into the soil so that its lower end is within the soil and its upper end is visible from outside the soil volume. The lower end of the rod is beveled to reflect light entering the rod from its upper end back toward the upper end.

In accordance with the method of the present invention, observance of the presence or absence of light at the upper end of the rod determines the moisture content of the soil. That is, the presence of light confirms that the soil is dry, whereas the absence of light (a dark end) confirms that the soil is moist. In accordance with the apparatus of the present invention, the rod is placed into the soil and a light sensor is placed adjacent to or on the upper end of the rod to control a pump or valve for providing water to the soil.

## Description

### BACKGROUND OF THE INVENTION

The present invention relates generally to an apparatus and method for monitoring the moisture content in soil and for maintaining proper soil moisture conditions. The invention finds advantageous use in maintaining soil moisture conditions for plants subsisting in the soil.

It is well known that most plants do best when the moisture content of the soil in which they live is maintained at a proper level; typically plants do best when their soil is kept moist, but not soaked. Water must be applied at the right frequency and in the correct amount. Too little water will, of course, kill the plant or at least cause it to enter a dormant state. If too much water is applied, roots can drown or mildew, resulting in death of the plant. When there are many plants to care for, often including both indoor and outdoor varieties, it can be difficult to determine when to water and how much water to apply to moisten the soil without over-watering. Typically, the particular needs of individual plants are ignored and water is applied on a uniform basis, usually at a time and in an amount that suits the caregiver, rather than the individual plant. Some plants may thrive while others decline. Uniform care is not a guaranty of uniform results. Plant size and type, pot size and type, soil type, plant location, season as well as variable weather conditions all interact to affect the water needs of the plant. Most plant caregivers are not experienced horticulturists who can make expert judgments regarding individual plant water requirements. At best, they are trained to judge soil moisture by sticking their finger an inch or two into the soil to feel for wetness. Even this requires some skill, and certainly is not convenient or practical in many cases. Ideally, there would be an indicator in the plant soil that could tell the caregiver at a glance whether or not there was sufficient moisture at the correct depth in the soil. Such an indicator would have to be very inexpensive to be practical for wide use. It would have to be reliable and long lived in all types of climates and soils, and suitable for both indoor and outdoor use. It would have to be maintenance free. Neither electronic devices which signal visually or audibly when soil dries out, or chemically reacting devices which change color when soil moistness changes would be suitable because they are either too expensive, or they require frequent maintenance or replacement.

### SUMMARY OF THE INVENTION

According to an aspect of the invention, there is provided a method as specified in claim 1.

According to another aspect of the invention, there is provided an apparatus as specified in claim 5.

The present invention is directed to an apparatus and a process which is low-cost, simple to use, reliable and long-lived and will effectively monitor the moisture condition of a volume of soil. In accordance with the invention, a light transmitting rod is placed into the soil so that its lower end is within the soil and its upper end is visible from outside the soil volume. The lower end of the rod is beveled so that the light entering the rod from its upper end is reflected back toward the upper end.

In accordance with the method of the present invention, observance of the presence or absence of light at the upper end of the rod determines the moisture content of the soil. That is, the presence of light confirms that the soil is dry, whereas the absence of light (a dark end) confirms that the soil is moist. In accordance with the apparatus of the present invention, the rod is placed into the soil and a light sensor is placed adjacent to or on the upper end of the rod and associated with appropriate circuitry to control a pump or valve for providing water to the soil.

### BRIEF DESCRIPTION OF THE DRAWINGS

These and other features, objects, and advantages of the present invention will become apparent from the following description of a preferred embodiment given by way of example only with reference to the accompanying drawings wherein like reference numerals represent like elements in the several views, and in which:
FIGURE 1 is a side cross-sectional view illustrating an embodiment of the present invention used in a potted plant application;
FIGURE 2 illustrates the top or exposed end of the soil moisture monitor as used in FIGURE 1 and depicting the moist soil or dry soil condition; and
FIGURE 3 is a schematic diagram illustrating a soil monitoring and automated watering system made in accordance with a preferred embodiment of the invention.

### DETAILED DESCRIPTION OF THE PREFERRED EMBODIMENTS

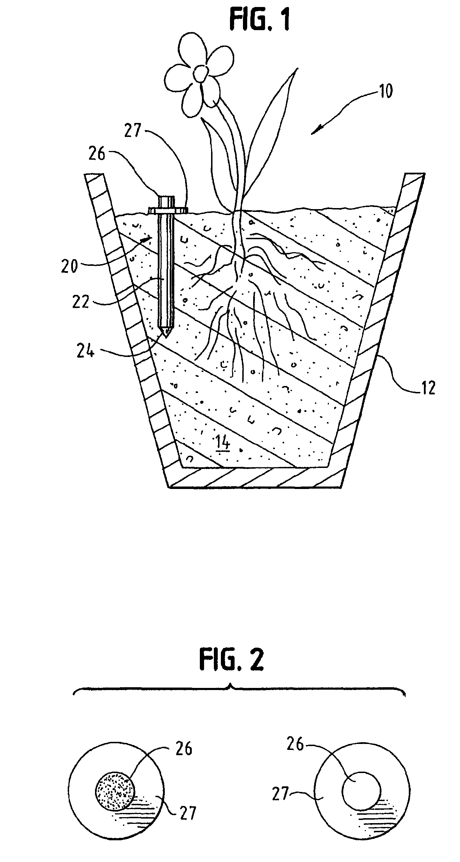

Referring now to the drawings and in particular to FIGURE 1, a plant 10 subsists in a conventional pot or other receptacle 12 holding soil 14. An optical indicator 20 is used to detect the soil moisture condition. The optical indicator 20 is a clear or translucent rod 22 having a lower end 24 and upper end 26. preferably it is an optical grade acrylic or other clear plastic that is durable, having a long service life. The rod may have a uniform cross section or may taper from top to bottom. The upper end 26 may include a flange 27. Ideally, both the beveled surfaces of end 24 and the sidewalls of rod 22 are smooth and polished. One end 24 is beveled, preferably to a point at a 90 degree included angle. The rod 22 is inserted into soil 14 so that the beveled end 24 is at a depth below the surface and the upper end 26 is visible above the soil surface. The length of the rod and/or the placement of lower end 24 may be varied to ascertain moisture conditions at a particular depth in the soil. The presence or absence of moisture in the soil at the beveled end 24 can be observed by looking at the upper exposed end 26. If the soil is moist, the visible end 26 will appear dark or black. If the soil is dry, the end 26 will appear bright. The brightness will depend on the ambient light. The brighter the ambient light, the brighter the end 26 of the rod will appear. Unexpectedly, the optical indicator works in soil the same way it works in a liquid reservoir. When moist soil (liquid present) contacts the beveled end, light rays, which enter the rod through the exposed end, are conducted down the rod and through the beveled end into the moist soil where the light is scattered. No light is reflected back up the rod, so the observer looking at the exposed end, where the ambient light entered, sees a black rod end, as illustrated in FIGURE 2, confirming that the soil is moist. When the soil is dry (liquid absent), the light is not conducted into the soil. Instead, it is reflected by the beveled end back up the rod so that the observer now sees a bright rod end, as shown in FIGURE 2, confirming that the soil is dry and the plant requires water. While watering the plant, the observer can see when the rod end turns black, and sufficient water has been applied to the plant to moisten the soil.

The optical soil moisture indicator makes plant care much more efficient. The caregiver can tell at a glance when the plant requires water, so that individual plant needs can be met. Over-watering is prevented because water can be applied to a controlled depth, by simply placing the beveled end of the rod at the desired control depth. Generally, most plants are maintained efficiently with moist soil at a depth of 2 inches below the surface.

The soil moisture indicator is not only useful for potted plants, it is also useful for lawns, gardens and even trees. The length of the rod can be set to meet the needs of nearly every plant growing situation. The rod is inexpensive, long lasting and maintenance free. It fills a long felt need in a very simple and efficient manner. Although optical indicators of this type have been used for years to detect liquid levels, they have not been used to the inventor's knowledge in solid/liquid mixture environments, since normally, optical indicators fail if solid materials coat the end of the indicator, or non-liquid materials collect and form a barrier between the end of the indicator and the liquid. Unexpectedly, this problem does not occur in soil because the soil allows moisture to move through it rather than the opposite situation in liquid level detection where insoluble particles suspended in the liquid accumulate on the end of the indicator.

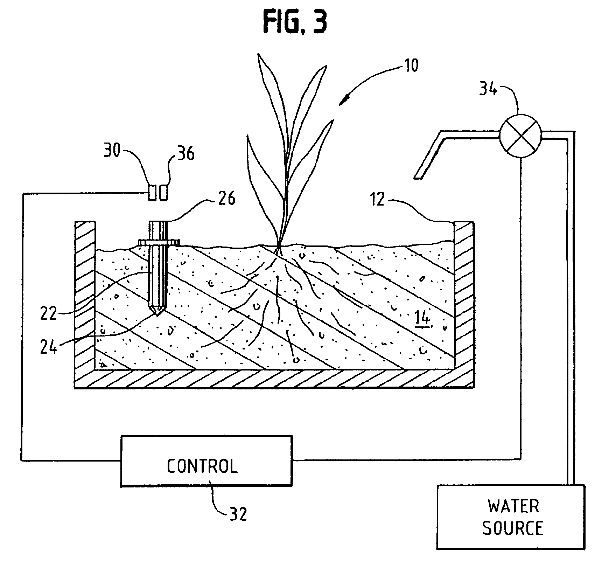

As illustrated in FIGURE 3, the optical soil moisture indicator can also function in an automatic plant watering system, in which individual plants (or areas) are watered on an as-needed basis. This is accomplished, for example, by using a light sensor 30, such as a phototransistor to detect the dark or bright rod end condition. The phototransistor is used to trigger a circuit 32 which controls the operation of a pump or solenoid valve, designated generally as 34, in response to the presence or absence of reflected light at the end of the rod. Thus, a signal issued by sensor 30 will act to operate device 34 in a manner to provide water to the soil in receptacle 12. A light source, such as a light emitting diode (LED) 36 may be used along with the light sensor to eliminate dependence on ambient light. The light sensor and light source may be mounted on or adjacent the end of the rod located above the soil surface. Control circuits for these devices are well known in the electronics field. This type of control system is widely used in the liquid level control art, but its viability for automatic plant watering is heretofore unknown.

It will be appreciated by those skilled in the art that various changes and modifications can be made to the illustrated embodiments without departing from the scope of the present invention. All such modifications and changes are intended to be covered by the appended claims.

## Claims

1. A method for monitoring the moisture content within a volume of soil comprising:
placing a rod into the soil, said rod being made from a light transmitting material and having a lower end positioned within the soil volume and an upper end visible from outside the soil volume, said rod lower end having a bevel sufficient to reflect light entering the rod from the upper end back toward said upper end; and
observing the presence or absence of light at the upper end of the rod to determine the moisture content of the soil.

2. The method of claim 1 wherein the soil moisture is monitored for purposes of maintaining a living plant in the soil volume.

3. The method of claim 2 wherein water is added to the soil upon a determination that the soil is dry by observing the absence of light at the upper end of the rod.

4. The method of claim 1 wherein a supplemental light source is utilized to input light to the upper end of the rod.

5. An apparatus for monitoring the moisture within a volume of soil and for maintaining moisture in the soil comprising:
a rod made from light transmitting material having a lower end for placement within the soil volume and an upper end for receiving light;
a light sensor mounted on or adjacent to the upper end of the rod, said sensor issuing a signal responsive to light transmitted by reflection from the lower end of the rod; and
a water dispensing member which provides water to said soil volume in response to said signal.

6. The apparatus of claim 5 further comprising a light emitting source positioned on or adjacent the upper end of the rod.
